(19) Europäisches Patentamt
European Patent Office
Office européen des brevets

(11) **EP 1 413 720 B1**

(12) **FASCICULE DE BREVET EUROPEEN**

(45) Date de publication et mention
de la délivrance du brevet:
**27.01.2010 Bulletin 2010/04**

(51) Int Cl.:
*F01N 11/00* $^{(2006.01)}$    *F01N 3/023* $^{(2006.01)}$
*F01N 9/00* $^{(2006.01)}$

(21) Numéro de dépôt: **03300150.4**

(22) Date de dépôt: **13.10.2003**

(54) **Procédé de détermination de la température interne d'un filtre à particules, procédé de commande de la génération du filtre à particules, système de commande et filtre à particules correspondant**

Verfahren zum Ermitteln der Innentemperatur eines Partikelfilters, Verfahren zur Steuerung der Regeneration des Partikelfilters, sowie Steuerungssystem und Partikelfilter

Method to determine the internal temperature of a particulate filter, method to control the regeneration of said particulate filter, control system and particulate filter thereof

(84) Etats contractants désignés:
**AT BE BG CH CY CZ DE DK EE ES FI FR GB GR HU IE IT LI LU MC NL PT RO SE SI SK TR**

(30) Priorité: **22.10.2002 FR 0213163**

(43) Date de publication de la demande:
**28.04.2004 Bulletin 2004/18**

(73) Titulaire: **RENAULT S.A.S.**
**92100 Boulogne Billancourt (FR)**

(72) Inventeurs:
 • **Da-Silva, Manuel**
   **91590 La Ferte Alais (FR)**
 • **Guyon, Marc**
   **91290 La Norville (FR)**
 • **Radenac, Erwan**
   **91120 Palaiseau (FR)**

(56) Documents cités:
   **WO-A-01/27447        US-A- 4 512 147**
   **US-A1- 2002 005 064**

 • **PATENT ABSTRACTS OF JAPAN vol. 017, no. 159 (M-1389), 29 mars 1993 (1993-03-29) & JP 04 325707 A (TOYOTA MOTOR CORP), 16 novembre 1992 (1992-11-16)**

**Description**

La présente invention concerne un procédé de détermination de la température interne d'un filtre à particules, et un procédé de commande de la génération du filtre en fonction de sa température interne.

L'invention permet de gérer le fonctionnement d'un système d'échappement de moteur à combustion interne, du type comportant un filtre à particules et des moyens pilotés d'aide à la régénération du filtre.

Les filtres à particules sont fréquemment utilisés à l'échappement des moteurs Diesel. On peut aussi prévoir leur utilisation pour des moteurs alimentés par d'autres carburants.

Parmi les systèmes connus pour éliminer les particules de suies émises par les moteurs à combustion interne et en particulier les moteurs Diesel, on peut citer les filtres à particules insérés dans les lignes d'échappement des moteurs. Un tel filtre est adapté pour piéger les particules de suies contenues dans les gaz d'échappement. Un dispositif de régénération piloté permet de brûler périodiquement les particules piégées dans le filtre et d'éviter le colmatage du filtre.

Les particules de suies brûlent à des températures de l'ordre de 550 à 600°. De telles températures ne sont que rarement atteintes par les gaz d'échappement d'un moteur Diesel automobile, puisque, par exemple en ville, la température des gaz d'échappement évolue entre 150 et 250°C. Il est donc nécessaire de disposer de moyens appropriés pour élever la température des gaz lorsqu'on souhaite régénérer un tel filtre à particules.

On a proposé des systèmes de chauffage par résistance électrique, notamment des grilles chauffantes, permettant de porter la température des gaz d'échappement à une valeur suffisante pour provoquer la combustion des particules dans le filtre.

D'autres systèmes proposent d'augmenter la température des gaz d'échappement par injection d'une quantité supplémentaire de carburant dans au moins une des chambres de combustion sous la forme d'une post-injection.

Après avoir injecté la quantité de carburant nécessaire au fonctionnement classique du moteur, une quantité supplémentaire est injectée dans un second temps. Une partie de cette quantité supplémentaire s'enflamme en produisant une augmentation de la température des gaz d'échappement. Le reste de cette quantité supplémentaire est transformé en produits d'oxydation partielle comme le monoxyde de carbone CO et les hydrocarbures HC.

Les produits d'oxydation partielle peuvent également participer à l'augmentation de la température des gaz d'échappement en réagissant par des réactions exothermiques avant leur arrivée dans le filtre à particules. Les réactions exothermiques peuvent être obtenues lors de la traversée d'un catalyseur d'oxydation disposé en amont du filtre à particules.

Par ailleurs, pour minimiser la dépense énergétique nécessaire à la combustion des particules de suies, il est également connu d'abaisser cette température de combustion des suies en utilisant des catalyseurs appropriés. Ainsi, il est connu d'ajouter dans le carburant un additif tel qu'un composé organo-métallique. L'additif mélangé au carburant se retrouve dans les particules de suies, ce qui lui permet de jouer un rôle catalytique lors de la combustion des particules de suies et d'abaisser les températures d'inflammation de ces dernières.

La mise en action de ces différents systèmes d'aide à la régénération est pilotée par un système électronique de commande qui détermine, en fonction d'un certain nombre de paramètres et notamment le chargement du filtre à particules, l'instant de la régénération. A cet égard, le document FR-A-2 802 972 propose de minimiser la durée de mise en action des moyens d'aide à la régénération pour limiter leur impact sur la consommation de carburant.

La mise en action des moyens d'aide à la régénération est déclenchée dès que le chargement en particules du filtre excède une valeur de seuil. Les paramètres de fonctionnement des moyens d'aide à la régénération, notamment la durée ou l'intensité, sont ajustés selon le déroulement de la régénération du filtre.

Par ailleurs, la connaissance de la masse de suies présente dans le filtre est une donnée importante pour la commande des moyens d'aide à la régénération. Lorsque la quantité de suies est trop faible, il est très difficile de les faire brûler, et lorsque la quantité est trop importante, la combustion fortement exothermique des suies risquerait de détruire le filtre.

Il s'avère donc souhaitable de pouvoir réaliser une estimation optimale de la durée de régénération couvrant l'ensemble des conditions de régénération, des conditions de fonctionnement de véhicules et de masses de suies initialement présentes.

Le document US 2002/0005064 décrit un appareil de détection, par estimation et calcul, de la température d'un pot catalytique.

L'invention propose un procédé de détermination de la température interne d'un filtre à particules, variable, qui ne peut être mesurée, mais qui présente une importance majeure pour une telle estimation optimale.

Le procédé de détermination de la température interne d'un filtre à particules, selon un aspect de l'invention, est réalisé par mesure d'une température d'entrée et d'une température de sortie du filtre, et par calcul de la température interne comme étant une moyenne pondérée de la température d'entrée et de la température de sortie avec a le coefficient de pondération.

Le coefficient de pondération a dépend de la température d'entrée et de la température de sortie. Plus particulièrement, le coefficient de pondération a peut être un fonction prédéterminée de la différence entre la température d'entrée et la température de sortie.

Avantageusement, on stocke les valeurs du coefficient de pondération a en fonction de la différence entre la température d'entrée et la température de sortie dans une table.

L'invention propose également un procédé de commande de la régénération d'un filtre à particules en fonction de sa température interne, dans lequel on mesure une température d'entrée et une température de sortie du filtre à particules, on calcule la température interne comme étant une moyenne pondérée de la température d'entrée et de la température de sortie avec a le coefficient de pondération, dépendant de la température d'entrée $T_e$ et de la température de sortie $T_s$, et on détermine les valeurs de la vitesse de combustion des particules dans le filtre à particules en fonction de la température interne.

Dans un mode de réalisation de l'invention, on stocke les valeurs de la vitesse de combustion des particules dans le filtre à particules en fonction de la température interne dans une table.

Avantageusement, on détermine la masse de particules présente dans le filtre à un instant donné par soustraction de la masse de particules présente dans le filtre à un instant antérieur, et de la vitesse de combustion des particules audit instant antérieur.

Dans un mode de réalisation de l'invention, on arrête la régénération du filtre à particules lorsque la masse de particules présente dans le filtre à un instant donné est inférieure à un seuil.

Dans un mode de réalisation de l'invention, on arrête la régénération du filtre à particules lorsque la vitesse de combustion des particules à un instant donné est inférieure à un seuil. On peut ainsi éviter une surconsommation inutile de carburant due à la poursuite inutilement prolongée de la mise en action des moyens de régénération. Dans les deux cas, le seuil peut être fixé à zéro ou à une autre valeur. Il est avantageux de combiner les deux conditions pour arrêter les moyens d'aide à la régénération dès que possible.

La vitesse de combustion est déterminée par l'équation de la forme suivante :

$$V = k_0 \ P_{02}{}^{\alpha} \ M(t)^{\beta} \ e^{-(E/R*Ti)}$$

avec $k_0$ une constante prédéterminée, $P_{02}$ la pression partielle d'oxygène, $\alpha$ et $\beta$ les ordres partiels de réaction, E une constante également prédéterminée, dite « énergie d'activation », $T_i$ la température interne du filtre, R la constante des gaz parfaits, et M(t) la masse de particules présente dans le filtre.

Or, on sait déterminer la masse avant la phase de régénération. On peut donc en déterminer la vitesse dès le début de la régénération, ce qui permet par itération de connaître la masse aux instants suivants.

Le système de commande de la régénération d'un filtre à particules, selon un aspect de l'invention, comprend un moyen de calcul de la température interne: $T_i = a \times T_e + (1-a) \times T_s$, avec a un coefficient de pondération, dépendant de la température d'entrée $T_e$ et de la

température de sortie $T_s$, $T_e$ la température d'entrée, $T_s$ la température de sortie du filtre à particules, et un moyen de détermination des valeurs de la vitesse de combustion de particules V dans le filtre à particules en fonction de la température interne $T_i$.

Dans un mode de réalisation de l'invention, le moyen de détermination comprend une table dans laquelle sont stockées les valeurs de la vitesse de combustion V en fonction de la température interne $T_i$. La vitesse de combustion pouvant aussi être calculée par la formule :

$$V = k_0 \ P_{02}{}^{\alpha} \ M(t)^{\beta} \ e^{-\{E/(R*Ti)\}}$$

avec $k_0$ et E des constantes et M(t) la masse de particules présente dans le filtre.

L'invention propose également un filtre à particules pourvu d'un moyen de commande de régénération, comprenant un moyen de calcul de la température interne

$$T_i = a \times T_e + (1-a) \times T_s,$$

avec a un coefficient de pondération, $T_e$ la température d'entrée et $T_s$ la température de sortie du filtre à particules, et un moyen de détermination des valeurs de la vitesse de combustion des particules V dans le filtre à particules en fonction de la température interne $T_i$.

Grâce à l'invention, on utilise la température interne du filtre à particules à la place de l'ensemble des informations transmises par différents capteurs de température et on utilise cette température interne pour l'ensemble des étapes nécessaires à la détermination des vitesses de régénération ou de calcul de la durée de régénération.

La présente invention sera mieux comprise et d'autres avantages apparaîtront à la lecture de la description détaillée de quelques modes de réalisation pris à titre d'exemples nullement limitatifs et illustrés par les dessins annexés, sur lesquels :

-    la figure 1 est un vue schématique d'un moteur à combustion interne équipé d'un filtre à particules, mettant en oeuvre le procédé selon l'invention ; et
-    la figure 2 est un organigramme précisant les différentes étapes possibles du procédé selon l'invention.

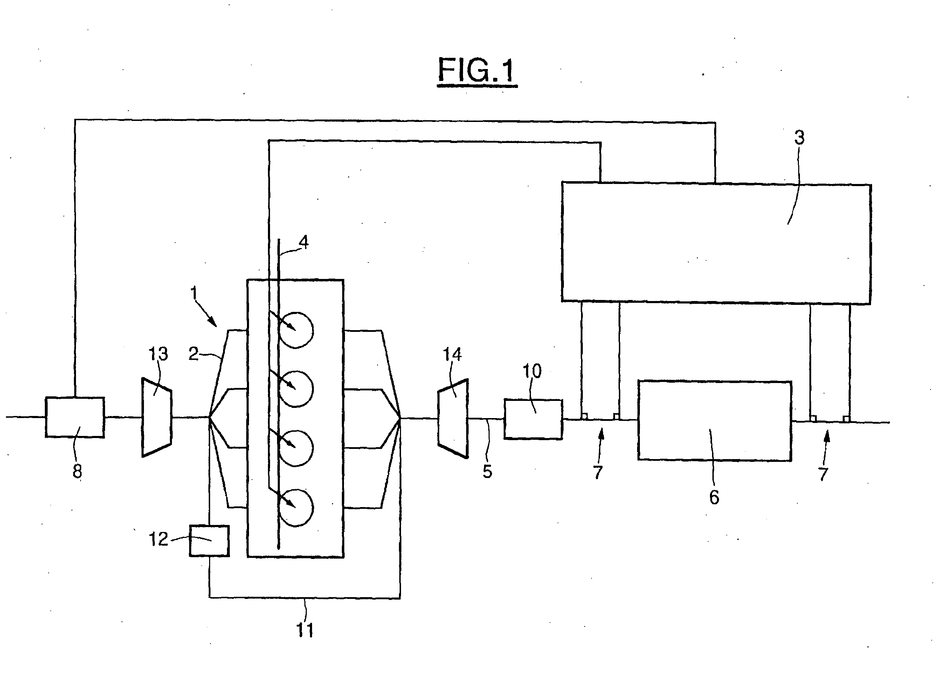

Sur la figure 1, ont été représentés de façon schématique les éléments nécessaires à la compréhension de l'invention.

Un moteur à combustion interne 1 est destiné à équiper un véhicule tel qu'une automobile. Le moteur 1 est ici un moteur Diesel suralimenté par turbocompresseur à quatre cylindres en ligne et à injection directe de carburant. Le moteur 1 est équipé d'une ligne d'échappement 5 munie d'un dispositif de filtration des particules de suies. Le moteur 1 est alimenté en air par un circuit d'admission 2.

Des capteurs appropriés, et, notamment un débitmètre 8, équipent le circuit d'admission 2 pour fournir à un calculateur de contrôle 3 des informations concernant la pression, la température ou encore le débit d'air d'admission alimentant le moteur 1. L'injection du carburant dans les cylindres est assurée par des injecteurs électromagnétiques, non représentés, débouchant dans les chambres de combustion et pilotés par le calculateur de contrôle 3 à partir d'un circuit de carburant sous pression 4, du type haute pression à rampe commune. En sortie du moteur 1, les gaz d'échappement évacués dans la ligne 5 traverse un filtre à particules 6.

Différents capteurs 7, tels que des capteurs de pression et de température, placés en amont et en aval du filtre 6, fournissent au calculateur de contrôle 3 des informations correspondantes. Il est également prévu d'équiper la ligne d'échappement d'un pot catalytique d'oxydation 10 traitant les émissions d'hydrocarbures imbrûlés HC et de monoxyde de carbone CO. Une partie des gaz d'échappement est recyclée à l'admission au moyen d'un circuit de recyclage 11 comportant une vanne 12 dont l'ouverture est pilotée par le calculateur de contrôle 3. Le turbocompresseur comprend une turbine 13 et un compresseur 14.

Le calculateur de contrôle 3 comprend, de manière classique, un microprocesseur ou unité centrale CPU, au moins une mémoire vive, au moins une mémoire morte, au moins un convertisseur analogique numérique et au moins une interface d' entrée/sortie. Le microprocesseur du calculateur de contrôle 3 comprend des circuits électroniques et des logiciels appropriés pour traiter les signaux en provenance des différents capteurs, en déduire les états du moteur et générer les signaux de commande appropriés à destination notamment des différents actuateurs pilotés.

Le calculateur 3 commande la pression du carburant dans la rampe commune 4 et l'ouverture des injecteurs et ce, à partir des informations délivrées par les différents capteurs, et en particulier de la masse d'air admise, du régime du moteur ainsi que de formules et de calibrations mémorisées permettant d'atteindre les niveaux de consommation et de performance souhaités. L'ouverture des injecteurs est plus particulièrement définie par l'instant de début d'injection et la durée d'ouverture des injecteurs, durée qui correspond pour une pression d'alimentation donnée à une quantité de carburant injectée et donc à une richesse du mélange remplissant les chambres de combustion.

Le calculateur 3 est également adapté pour assurer la gestion du fonctionnement du système d'échappement, et notamment du filtre à particules 6. Le calculateur 3 déduit, à partir des informations fournies notamment par les capteurs de pression 7, le niveau de remplissage du filtre. Le calculateur 3 déclenche ensuite, en fonction de la valeur du chargement en suies du filtre, une phase de régénération conformément à des stratégies adaptées. La phase de régénération consiste essentiellement à augmenter la température des gaz d'échappement traversant le filtre 6, de façon à enflammer les particules piégées. Une augmentation de la température est initiée par la mise en action de moyens d'aide à la régénération appropriée, ci-après appelée de façon générique « moyens de chauffage ».

Différents moyens de chauffage peuvent être employés, par exemple des résistances chauffantes électriques disposées dans le flux des gaz d'échappement, ou encore une élévation de la température des gaz d'échappement par post-combustion. La post-combustion peut être réalisée par simple commande des injecteurs, par exemple en injectant lors de la phase de détente une quantité additionnelle de carburant, et ce pendant un nombre donné de cycles du moteur.

On peut encore prévoir un moyen de chauffage agissant directement sur le filtre, ou encore directement sur les suies, par exemple au moyen d'une bougie.

Le calculateur de contrôle 3 est également adapté pour mettre en oeuvre un contrôle du déclenchement et du déroulement de la régénération du filtre et un contrôle du fonctionnement et de l'intégrité du filtre, intégrant notamment une alerte du conducteur en cas de dysfonctionnement.

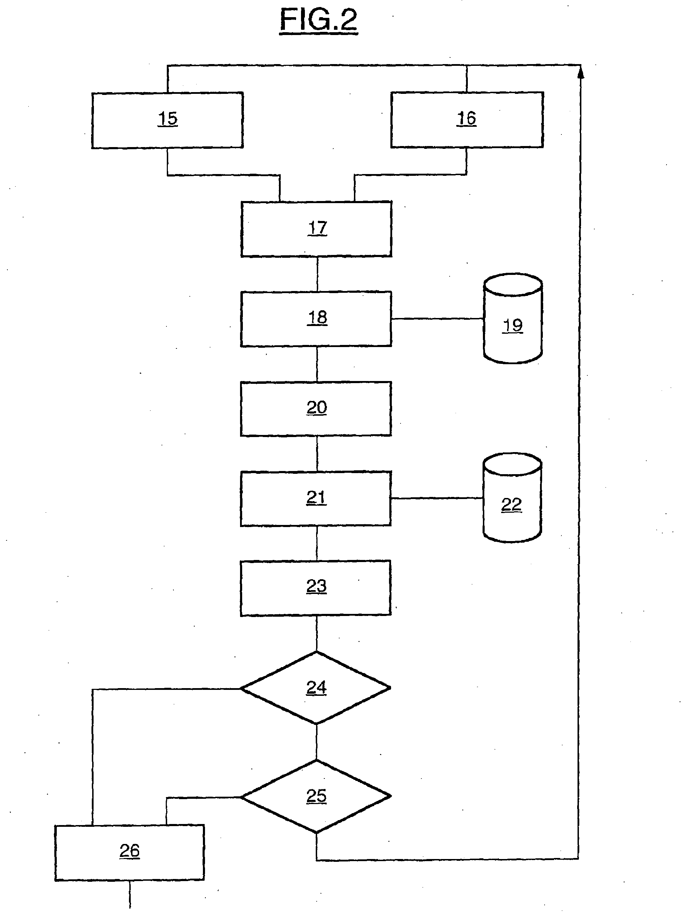

Sur la figure 2, est illustré un organigramme de gestion du filtre à particules, selon un aspect de l'invention.

A l'étape 15, on effectue tout d'abord une mesure de la température d'entrée $T_e$ des gaz d'échappement dans le filtre à particules et en même temps on effectue l'étape 16 de mesure de la température de sortie $T_s$ des gaz d'échappement du filtre à particules.

A l'étape 17, on calcule la différence $\Delta T = T_e - T_s$ entre la température d'entrée et la température de sortie du filtre à particules.

A l'étape 18, on détermine le coefficient de pondération a en envoyant à une table 19 la différence de température $\Delta T$ et en recevant en réponse le coefficient de pondération a.

A l'étape 20, on calcule la température interne $T_i$ du filtre à particules par la formule

$$T_i = a \times T_e + (1-a)\, T_s$$

La température interne est donc une moyenne pondérée par le coefficient de pondération a, des températures d'entrée $T_e$ et de sortie $T_s$.

A l'étape 21, on détermine la vitesse instantanée de combustion des suies en envoyant à une table 22 la température interne du filtre $T_i$ et en recevant en réponse la vitesse de combustion V.

A l'étape 23, on met à jour la masse de suies dans le filtre en ôtant à la masse préalablement connue la vitesse de combustion V. En d'autres termes, la masse de suies présente à l'instant i+1 est calculée par

$$M(i+1) = M(i) - V(i)$$

A l'étape 24, on effectue un test sur la masse de suies. Si la masse de suies est supérieure à un seuil prédéterminé, on passe à l'étape 25, et si elle est inférieure audit seuil, on passe à l'étape 26.

A l'étape 25, on effectue un test sur la vitesse de combustion. Si la vitesse de combustion est supérieure à un seuil prédéterminé, on recommence les différentes étapes et on effectue une nouvelle acquisition des températures d'entrée et de sortie aux étapes 15 et 16. Si la vitesse de combustion est inférieure au seuil prédéterminé, on passe là encore à l'étape 26 qui consiste en l'arrêt des moyens d'aide à la régénération.

La masse de suies présente dans le filtre à particules avant le début de la régénération, peut être estimée par d'autres moyens. On peut se reporter à cet effet au document FR-A-2 802 172. On comprend que, pour la première exécution du cycle illustrée sur la figure 2, il convient de disposer de la valeur initiale de la masse de suies.

L'invention offre un moyen simple et économique de gérer un filtre à particules par détermination de sa température interne, variable qui permet d'estimer les autres variables intéressantes, telles que la vitesse de combustion et la masse au cours de la phase active des moyens d'aide à la régénération, ce qui permet d'arrêter le fonctionnement desdits moyens d'aide à la régénération, et donc de réduire la consommation d'énergie du véhicule, indépendamment de la nature des moyens d'aide à la régénération, chauffage électrique ou chauffage par injection d'une quantité supplémentaire de carburant. Dans tous les cas, on parvient à réduire la consommation d'énergie et donc de carburant.

En outre, l'invention peut prévoir l'arrêt des moyens d'aide à la régénération avec d'autres tests, tels qu'un test suivant la température interne afin d'éviter un échauffement excessif du filtre et donc une détérioration lors de la régénération en raison de la réaction exothermique de combustion des suies.

L'invention fait appel à un petit nombre de capteurs économiques et fiables pour améliorer la régénération du filtre et en réduisant la consommation d'énergie, et par conséquent la pollution qui en résulte.

## Revendications

1. Procédé de détermination de la température interne d'un filtre à particules (6), dans lequel on mesure une température d'entrée $T_e$ et une température de sortie $T_s$, et on calcule la température interne $T_i = a T_e + (1-a) T_s$, avec a un coefficient dépendant de la température d'entrée $T_e$ et de la température de sortie $T_s$.

2. Procédé selon la revendication 1, dans lequel on calcule le coefficient a = $f(T_e - T_s)$, avec f une fonction prédéterminée.

3. Procédé selon l'une quelconque des revendications précédentes, dans lequel on stocke les valeurs du coefficient a en fonction de la différence $(T_e - T_s)$ dans une table.

4. Procédé selon l'une quelconque des revendications précédentes, destiné à commander la régénération d'un filtre à particules en fonction de sa température interne, dans lequel on détermine les valeurs de la vitesse de combustion de particules V dans le filtre à particules en fonction de la température interne $T_i$.

5. Procédé selon la revendication 4, dans lequel on stocke les valeurs de la vitesse de combustion de particules V dans le filtre à particules (6) en fonction de la température interne $T_i$ dans une table.

6. Procédé selon la revendication 5, dans lequel on détermine la masse de particules présentes dans le filtre (6) à un instant donné M(i) par soustraction de la masse de particules présentes dans le filtre à l'instant antérieur M(i-1) et de la vitesse de combustion de particules V(i-1) à l'instant antérieur.

7. Procédé selon l'une quelconque des revendications 4 à 6, dans lequel on arrête la régénération du filtre à particules (6) lorsque la masse de particules présentes dans le filtre à un instant donné M(i) est inférieure à un seuil.

8. Procédé selon l'une quelconque des revendications 4 à 7, dans lequel on arrête la régénération du filtre à particules (6) lorsque la vitesse de combustion de particules à un instant donné V(i) est inférieure à un seuil.

9. Système de commande de la régénération d'un filtre à particules (6), **caractérisé par le fait qu'**il comprend un moyen de calcul de la température interne $T_i = a * T_e + (1-a) * T_s$, avec a un coefficient dépendant de la température d'entrée $T_e$ et de la température de sortie $T_s$, $T_e$ la température d'entrée et $T_s$ la température de sortie, et un moyen de détermination des valeurs de la vitesse de combustion de particules V dans le filtre à particules en fonction de la température interne $T_i$.

10. Filtre à particules (6) pourvu d'un système de commande de régénération selon la revendication 9.

**Claims**

1. Method for determining the internal temperature of a particulate filter (6), in which an inlet temperature $T_e$ and an outlet temperature $T_s$ are measured, and the internal temperature $T_i = a.T_e+(1-a).T_s$ is calculated, where a is a coefficient dependent on the inlet temperature $T_e$ and on the outlet temperature $T_s$.

2. Method according to Claim 1, in which the coefficient $a = f(T_e - T_s)$ is calculated, where f is a predetermined function.

3. Method according to any one of the preceding claims, in which the values of the coefficient a as a function of the difference $(T_e - T_s)$ are stored in a table.

4. Method according to any one of the preceding claims intended to control the regeneration of a particulate filter as a function of its internal temperature, in which method the values of the rate of combustion of particles V in the particulate filter are determined as a function of the internal temperature $T_i$.

5. Method according to Claim 4, in which the values of the rate of combustion of particles V in the particulate filter (6) as a function of the internal temperature $T_i$ are stored in a table.

6. Method according to Claim 5 in which the mass of particles present in the filter (6) at a given moment M(i) is determined by subtraction from the mass of particles present in the filter at the earlier moment M(i-1) and from the rate of combustion of particles V(i-1) at the earlier moment.

7. Method according to any one of Claims 4 to 6, in which regeneration of the particulate filter (6) is halted when the mass of particles present in the filter at a given moment M(i) is below a threshold.

8. Method according to any one of Claims 4 to 7, in which regeneration of the particulate filter (6) is halted when the rate of combustion of particles at a given moment V(i) is below a threshold.

9. System for controlling the regeneration of a particulate filter (6), **characterized in that** it comprises a means of calculating the internal temperature $T_i = a \times T_e + (1-a) \times T_s$, where a is a coefficient dependent on the inlet temperature $T_e$ and on the outlet temperature $T_s$, $T_e$ is the inlet temperature and $T_s$ is the outlet temperature, and a means of determining the values of the rate of combustion of particles V in the particulate filter as a function of the internal temperature $T_i$.

10. Particulate filter (6) provided with a regeneration control system according to Claim 9.

**Patentansprüche**

1. Verfahren zur Bestimmung der Innentemperatur eines Partikelfilters (6), bei dem eine Eingangstemperatur $T_e$ und eine Ausgangstemperatur $T_s$ gemessen werden und die Innentemperatur $T_i = a T_e + (1-a) T_s$ mit einem Koeffizient berechnet wird, der von der Eingangstemperatur $T_e$ und der Ausgangstemperatur $T_s$ abhängt.

2. Verfahren nach Anspruch 1, bei dem der Koeffizient $a = f(T_e - T_s)$ berechnet wird, wobei f eine vorbestimmte Funktion ist.

3. Verfahren nach einem der vorhergehenden Ansprüche, bei dem die Werte des Koeffizienten a in Abhängigkeit von der Differenz $(T_e - T_s)$ in einer Tabelle gespeichert werden.

4. Verfahren nach einem der vorhergehenden Ansprüche, das dazu bestimmt ist, die Regeneration eines Partikelfilters in Abhängigkeit von seiner Innentemperatur zu steuern, bei dem die Werte der Partikel-Verbrennungsgeschwindigkeit V im Partikelfilter in Abhängigkeit von der Innentemperatur $T_i$ bestimmt werden.

5. Verfahren nach Anspruch 4, bei dem die Werte der Partikel-Verbrennungsgeschwindigkeit V im Partikelfilter (6) in Abhängigkeit von der Innentemperatur $T_i$ in einer Tabelle gespeichert werden.

6. Verfahren nach Anspruch 5, bei dem die Masse von im Filter (6) in einem gegebenen Zeitpunkt M(i) vorhandenen Partikeln durch Subtraktion der Masse von im Filter im vorhergehenden Zeitpunkt M(i-1) vorhandenen Partikeln und der Partikel-Verbrennungsgeschwindigkeit V(i-1) im vorhergehenden Zeitpunkt bestimmt wird.

7. Verfahren nach einem der Ansprüche 4 bis 6, bei dem die Regeneration des Partikelfilters (6) beendet wird, wenn die Masse von im Filter in einem gegebenen Zeitpunkt M(i) vorhandenen Partikeln unter einem Schwellwert liegt.

8. Verfahren nach einem der Ansprüche 4 bis 7, bei dem die Regeneration des Partikelfilters (6) beendet wird, wenn die Partikel-Verbrennungsgeschwindigkeit in einem gegebenen Zeitpunkt V(i) unter einem Schwellwert liegt.

9. System zur Steuerung der Regeneration eines Partikelfilters (6), **dadurch gekennzeichnet, dass** es eine Einrichtung zur Berechnung der Innentemperatur $T_i = a * T_e + (1-a) * T_s$ mit a einem Koeffizient, der von der Eingangstemperatur $T_e$ und der Ausgangstemperatur $T_s$ abhängt, $T_e$ der Eingangstemperatur und $T_s$ der Ausgangstemperatur, und eine Einrichtung zur Bestimmung der Werte der Partikel-Verbrennungsgeschwindigkeit V im Partikelfilter in Abhängigkeit von der Innentemperatur $T_i$ aufweist.

10. Partikelfilter (6), der mit einem System zur Regenerationssteuerung nach Anspruch 9 versehen ist.

## FIG.1

EP 1 413 720 B1

# FIG.2

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2802972 A
- US 20020005064 A

- FR 2802172 A